# EUROPÄISCHE PATENTANMELDUNG

(11) **EP 3 279 845 A1**
(43) Veröffentlichungstag der Anmeldung: **07.02.2018**
(21) Anmeldenummer: 17179839.0
(22) Anmeldetag: 05.07.2017
(51) Int. Cl.: G06Q 20/20

(54) **KASSIERANLAGENSYSTEM**

(30) Priorität: 05.08.2016 DE 102016114558
(71) Anmelder: Wanzl Metallwarenfabrik GmbH, 89340 Leipheim (DE)
(72) Erfinder: Hämmerle, Jürgen, 89312 Günzburg (DE); Zimmermann, Marco, 89340 Leipheim (DE); Pfitzmaier, Markus, 89358 Kammeltal OT Goldbach (DE)

(57) **Zusammenfassung**

Die vorliegende Erfindung betrifft ein Kassieranlagensystem (10) umfassend wenigstens eine Kassieranlagenmanagementeinheit (12) und wenigstens eine oder mehrere Kassieranlage(n) (14), wobei die Kassieranlage (14) wenigstens eine variierbare optische und/oder akustische Ausgabevorrichtung (16) aufweist, mittels derer Informationen zum Status und/oder zukünftigen Status der Kassieranlage (14) optisch und/oder akustisch ausgebbar sind, wobei die Kassieranlagenmanagementeinheit (12) und die Kassieranlage (14) über eine Netzwerkverbindung (22) miteinander in Kommunikationsverbindung stehen und über die Kassieranlagenmanagementeinheit (12) die Ausgabevorrichtung (16) der Kassieranlage (14) ansteuerbar ist.

## Beschreibung

Die vorliegende Erfindung betrifft ein Kassieranlagensystem umfassend wenigstens eine Kassieranlagenmanagementeinheit und wenigstens eine oder mehrere Kassieranlage(n).

Kassieranlagensysteme mit Anzeigevorrichtungen im Zusammenhang mit einer Vielzahl von Kassieranlagen in Einzelhandelsgeschäften sind beispielsweise bereits aus der DE 1 977 291 U1 und der EP 1 090 570 B1 bekannt.

Die DE 10 2008 003 697 B4 beschreibt ein Verfahren zum Betrieb eines Aggregats aus einer Anzeigevorrichtung und einer Kassieranlage bzw. mehreren Kassieranlagen zur Verwendung insbesondere in Einzelhandelsgeschäften, wobei die Anzeigevorrichtung mit wenigstens einem variierbaren Anzeigefeld und zusätzlich einer Sprachausgabeeinheit ausgerüstet ist, wobei ferner die Kassieranlage im Zuge ihrer Aktivierung / Deaktivierung unmittelbar ein Signal an die Anzeigevorrichtung sendet, um den Status der Kassieranlage optisch und akustisch wiederzugeben, und wobei mittels einer Bedieneinheit wahlweise eine oder mehrere weiterer Kassieranlagen und zugeordnete Anzeigevorrichtungen hinzugeschaltet werden, um den jeweils aktuellen und zukünftigen Status der Kassieranlage - unabhängig von deren Aktivierung / Deaktivierung - optisch anzuzeigen und akustisch auszugeben.

Die bisher bekannten Lösungen ermöglichen es jedoch, nur eine bestimmte, geringe Anzahl von Kassieranlagen entsprechend betreiben zu können.

Es ist daher die Aufgabe der vorliegenden Erfindung, ein Kassieranlagensystem der eingangs genannten Art in vorteilhafter Weise weiterzubilden, insbesondere dahingehend, dass mehrere Kassieranlagen gesteuert werden können, und zwar idealerweise zentral und dass darüber hinaus die Anzahl der zentral gesteuerten Kassieranlagen deutlich erhöht werden kann.

Diese Aufgabe wird erfindungsgemäß gelöst durch ein Kassieranlagensystem mit den Merkmalen des Anspruchs 1. Danach ist vorgesehen, dass ein Kassieranlagensystem wenigstens eine Kassieranlagenmanagementeinheit und wenigstens eine oder mehrere Kassieranlage(n) aufweist, wobei die Kassieranlage wenigstens eine variierbare optische und/oder akustische Ausgabevorrichtung aufweist, mittels derer Informationen zum Status und/oder zukünftigen Status der Kassieranlage optisch und/oder akustisch ausgebbar sind, wobei die Kassieranlagenmanagementeinheit und die Kassieranlage über eine Netzwerkverbindung miteinander in Kommunikationsverbindung stehen und über die Kassieranlagenmanagementeinheit die Ausgabevorrichtung der Kassieranlage ansteuerbar ist.

Die Erfindung basiert auf dem Grundgedanken, mehrere Kassieranlagen mit einem Netzwerk miteinander zu verbinden. Dabei soll die Netzwerkverbindung dementsprechend ausgelegt sein, dass eine Vielzahl von Kassieranlagen mit der Kassieranlagenmanagementeinheit in Verbindung stehen kann. Hierzu sollen explizit nicht wie bisher die üblicherweise verwendeten Feldbus-Systems bzw. Industriebus-System verwendet werden. Diese werden nicht unter dem Begriff einer Netzwerkverbindung gefasst im Sinne der vorliegenden Offenbarung. Unter einer Netzwerkverbindung wird eine Verbindung verstanden, mittels derer die Kassieranlagenmanagementeinheit und/oder die Kassieranlage bzw. die Kassieranlagen in Kommunikationsverbindung stehen, wobei die Kommunikationsverbindung vorzugsweise bi-direktional ist. Die über diese Netzwerkverbindung etablierte Kommunikationsverbindung kann zentral über die Kassieranlagenmanagementeinheit, die Ausgabevorrichtung der Kassieranlage bzw. aller angeschlossenen Kassieranlagen angesteuert werden. Zugleich ist es auch möglich, von der Kassieranlage Rückmeldung an die Kassieranlagenmanagementeinheit zu geben, beispielsweise dahingehend, dass Unterstützung oder entsprechende Spezialfunktionen, wie das Herbeirufen eines Marktleiters oder die Autorisierung bestimmter Vorgänge, benötigt werden. Die Netzwerkverbindung kann kabellos und/oder kabelgebunden sein.

Des Weiteren kann vorgesehen sein, dass wenigstens zwei Kassieranlagen vorgesehen sind. Insbesondere kann eine Vielzahl von Kassieranlagen vorgesehen sein. Eine Vielzahl von Kassieranlagen kann dabei 10 oder mehr Kassieranlagen, beispielsweise mehr als 15 (z.B. 15-25 Kassieranlagen) und insbesondere auch eine sehr große Anzahl von 40-50 oder mehr Kassieranlagen umfassen. Grundsätzlich ist durch die Verwendung einer Netzwerkverbindung im Sinne dieser Erfindung und der vorliegenden Offenbarung der Anzahl der Kassieranlagen nicht zwingend nach oben eine Grenze gesetzt. Beschränkungen ergeben sich dann eher aus den baulichen Gegebenheiten des Gebäudes des Marktes. Durch eine Vielzahl von Kassieranlagen wird es möglich, einen effizienten Betrieb des Kassieranlagensystems zu ermöglichen, insbesondere können die zu den Kassen strömenden Personen entsprechend aufgeteilt werden. Diese Aufteilung kann über die Kassieranlagenmanagementeinheit bewerkstelligt werden.

Die Netzwerkverbindung kann eine LAN-Verbindung sein. Insbesondere kann vorgesehen sein, dass die LAN-Verbindung eine LAN-Verbindung nach dem CAT5-Standard oder höher ist. Hierdurch wird es möglich, beispielsweise auf die bereits bestehende Infrastruktur zurückgreifen zu können. So sind im Einzelhandel üblicherweise in den Bereichen, in denen Kassieranlagensysteme installiert sind, LAN-Verbindungen vorhanden. Darüber hinaus ermöglicht eine LAN-Verbindung eine stabile Datenübertragung und Kommunikationsverbindung zwischen der Kassieranlagenmanagementeinheit und der bzw. den Kassieranlage(n). Andere Netzwerkverbindungen wie z.B. WLAN oder ZigBee etc. sind denkbar.

Insbesondere ist die Netzwerkverbindung keine Bus-Verbindung bzw. Feldbus-Verbindung oder Industriebus-Verbindung.

Die Kassieranlagenmanagementeinheit kann eine Statusanzeige aufweisen, mittels derer der Status der Kassieranlage anzeigbar ist. Über eine derartige Anzeige kann zentral bei der Kassieranlagenmanagementeinheit der Status der bzw. der Vielzahl von Kassieranlage(n) überwachbar sein. Insbesondere in einem Fall, in dem mehrere Kassieranlagen vorgesehen sind, ist es hilfreich, eine Vielzahl von Kassieranlagen und deren Status sich zentral anzeigen lassen zu können. Hierüber kann dann zentral über einen entsprechenden Kassieranlagenmanager bzw. Nutzer der Kassieranlagenmanagementeinheit kontrolliert werden, inwieweit die im Moment offenen und geschlossenen Kassieranlagen auch dem tatsächlichen Bedarf an geöffneten Kassieranlagen entsprechen.

Die Kassieranlagenmanagementeinheit kann weiter eine Eingabevorrichtung aufweisen, mittels derer der Status der Kassieranlage veränderbar ist. Dadurch wird es möglich, beispielsweise eine inaktive Kassieranlage aus der Vielzahl der Kassieranlagen auf einen aktiven Status zu setzen. Die Statusänderung kann entsprechend über akustische und optische Ausgaben angekündigt werden, so dass es den Kunden ermöglicht wird, sich entsprechend an die zur Öffnung anstehende Kassieranlage zu orientieren. Umgekehrt ist es natürlich auch möglich, dass der Status der Kassieranlage von aktiv auf inaktiv gestellt wird. In diesem Zusammenhang kann dann bei einer entsprechenden Eingabe der Kassieranlagenmanagementeinheit eine Ausgabe erzeugt werden, dass keine Ware mehr an dieser Kassieranlage aufgelegt werden soll und dass diese Kassieranlage nunmehr schließt.

Insbesondere kann vorgesehen sein, dass Anzeige- und Eingabevorrichtung kombiniert zu einer kombinierten Eingabe- und Anzeigevorrichtung ausgeführt sind, wobei insbesondere Anzeige- und Eingabevorrichtung als Touchscreen ausgeführt sind. Dadurch wird eine besonders einfache und intuitive Eingabe, aber gleichzeitig auch eine Ausgabemöglichkeit der entsprechend notwendigen Informationen für das Kassieranlagensystem bereitgestellt.

Denkbar ist, dass das Kassieranlagensystem auch sog. Self-Checkout-Zonen aufweist. Dies sind Bereiche, in denen der Kunde selbst die Ware scannen und bezahlen kann. Diese Self-Checkout-Zone kann kontrollierbar über die Kassieranlagenmanagementeinheit sein. In diesem Zusammenhang kann auch eine Kontrolle nicht nur über den Status der Self-Checkout-Zone, sondern auch hinsichtlich des Alters des Einkäufers ermöglicht werden. Denkbar ist dies insbesondere dahingehend, dass beispielsweise bei Zweifeln im Hinblick auf das notwendige Alter für die zu kaufenden Waren, ein entsprechender Alarm oder eine entsprechende Altersverifizierung eingefordert werden kann. Dies kann über die Kassieranlagenmanagementeinheit entsprechend eingesteuert werden. In der Self-Checkout-Zone können entsprechende Identifizierungssysteme bzw. Altersnachweissysteme wie Kartenleser für einen Personalausweis, Kundenkarten oder sonstige geeignete Altersnachweise, wie ein Führerschein vorhanden sein. Denkbar ist aber auch, dass bei fehlender Überwachung der Self-Checkout-Zone automatisch eine Altersverifikation eingefordert wird. Dies kann dann ebenfalls über das Scannen eines Personalausweises oder das Einschieben einer EC-Karte oder dergleichen erfolgen. Auch die Kontrolle von Kundenkarten oder Führerscheinen kann hier denkbar sein.

Des Weiteren kann vorgesehen sein, dass als Kontrollsoftware für das Kassieranlagensystem eine webbrowserbasierte Kontrollsoftware eingesetzt wird. Dadurch wird es möglich, ohne größere Kompatibilitätsprobleme eine Kommunikation zwischen der Kassieranlagenmanagementeinheit und den Kassieranlagen zu etablieren, wobei direkt die bereits vorhandene Netzwerkverbindung beispielsweise in einem Gebäude für einen Einzelhandelsmarkt genutzt werden kann. Auch eine einfache und intuitive Bedienung kann hierüber bereitgestellt werden.

Weitere Einzelheiten und Vorteile der Erfindung sollen nun anhand eines in den Zeichnungen dargestellten Ausführungsbeispiels näher erläutert werden.

Es zeigen
Fig.1 eine Übersichtsdarstellung eines Ausführungsbeispiels eines erfindungsgemäßen Kassieranlagensystems;
Fig. 2 eine weitere Übersichtsdarstellung des erfindungsgemäßen Ausführungsbeispiels gemäß Fig. 1;
Fig.3 eine Ansicht der kombinierten Eingabe- und Anzeigevorrichtung der Kassieranlagenmanagementeinheit des Kassieranlagensystems gemäß Fig. 1;
Fig. 4 eine weitere Ansicht der kombinierten Eingabe- und Anzeigevorrichtung gemäß Fig. 1 und Fig. 3;
Fig. 5 eine weitere Ansicht der kombinierten Eingabe- und Anzeigevorrichtung gemäß Fig. 1; und
Fig. 6 eine weitere Ansicht der kombinierten Eingabe- und Anzeigevorrichtung gemäß Fig. 1.

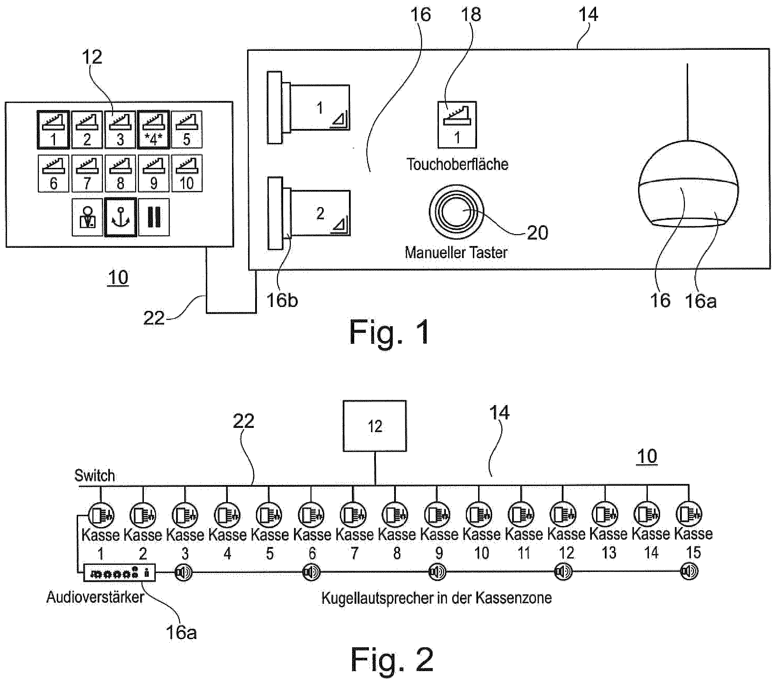

   - Fig. 1: zeigt in einer schematischen Übersichtsdarstellung ein erfindungsgemäßes Ausführungsbeispiel eines Kassieranlagensystems 10.

Das Kassieranlagensystem 10 weist eine Kassieranlagenmanagementeinheit 12 sowie eine Kassieranlage 14 auf.

Die Kassieranlage 14 ist dabei beispielsweise mit einem nicht näher dargestellten Förderband zum Auflegen von abzukassierender Ware sowie einer entsprechenden Kassierbox mit einer Registrierkasse versehen (ebenfalls nicht näher dargestellt).

Darüber hinaus weist die Kassieranlage 14 aber eine variierbare optische und akustische Anzeigevorrichtung 16 mit einer Sprachansage 16a und Statusanzeigen 16b, die illuminierbar sind, auf.

Die Sprachansage 16a kann, wie in Fig. 2 gezeigt, Deckenlautsprechersysteme aufweisen, die jeweils einer oder auch mehreren oder allen Kassieranlagen 14 zugeordnet sind.

Ein derartiges Deckenlautsprechersystem kann, wie in Fig. 2 gezeigt, einen Audioverstärker und Lautsprecher wie beispielsweise Kugellautsprecher in den Kassenzonen, die an der Decke montiert sind, aufweisen.

Die illuminierbaren Statusanzeigen 16b können beispielsweise in rot und grün illuminiert werden, um eine geschlossene Kasse (rote Illuminierung) und eine geöffnete Kasse (grüne Illuminierung) anzuzeigen.

Auch die Nummer der Kasse kann in der Statusanzeige angezeigt werden, wie dies in Fig. 1 gezeigt ist. Die Nummer der Kasse ist hier illuminierbar.

Ein Schalten von geschlossen auf geöffnet bzw. umgekehrt kann durch eine Blinkfunktion der Statusanzeigen 16b erzeugt werden.

Grünes Blinken bedeutet dann beispielsweise, dass eine Statusänderung der Kassieranlage 14 von geschlossen auf offen erfolgt.

Rotes Blinken bedeutet dann beispielsweise, dass eine Statusänderung der Kassieranlage 14 von offen auf geschlossen erfolgt.

Die jeweilige Kasse wird mit ihrer Nummer mit der Statusanzeige 16b auch angezeigt, hier gezeigt sind die Kassen 1 und 2, grundsätzlich kann vorgesehen sein, dass bis n Kassen angezeigt werden.

Die Kassieranlage 14 weist ebenfalls eine Touchoberfläche 18 zur Statusänderung der Kassieranlage 14 vor Ort auf.

Darüber hinaus ist auch ein manueller Taster 20 vorgesehen, über den ebenfalls der Status der einzelnen Kassieranlagen 14 verändert werden kann.

Wie dies weiter in Fig. 1 und Fig. 2 gezeigt ist, sind die Kassieranlagen 14 (hier als Kassen 1 bis 15 dargestellt) mittels einer Netzwerkverbindung 22 miteinander verbunden und mit dieser Netzwerkverbindung 22 auch mit der Kassieranlagenmanagementeinheit 12.

Hier ist im Zusammenhang mit den Kassieranlagen 14 nur gezeigt, wie die Kasse 1 mit der akustischen Ausgabevorrichtung 16a verbunden ist. Grundsätzlich kann jede Kassieranlage 14 mit derartigen akustischen Ausgabevorrichtungen 16a, hier beispielsweise mit einem Audioverstärker sowie mehreren Kugellautsprechern in der Kassenzone versehen sein.

Die Kassieranlagenmanagementeinheit 12 und die Kassieranlagen 14 sind über die Netzwerkverbindung 22 miteinander verbunden und hierüber in Kommunikationsverbindung stehend.

Über die Netzwerkverbindung 22, die eine LAN-CAT 5 (oder auch höher) sein kann, wird eine einfache Verkabelung ermöglicht.

Grundsätzlich kann über das Netzwerk 22 die Kassieranlage 14 entsprechend angesteuert werden über die Kassieranlagenmanagementeinheit 12.

Darüber hinaus wird aber bei einer entsprechenden manuellen Betätigung an der jeweiligen Kassieranlage 14 über die Touchoberfläche 18 oder den manuellen Taster 20 der entsprechende Status auch über die Netzwerkverbindung 22 wieder an die Kassieranlagenmanagementeinheit 12 rückgemeldet.

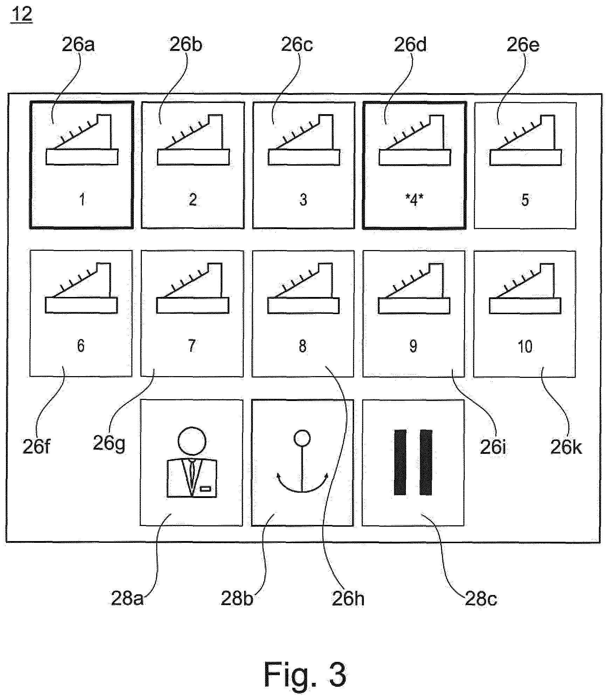

Wie in Fig. 3 gezeigt, weist die Kassieranlagenmanagementeinheit 12 einen Touchscreen 24 auf, auf dem der jeweilige Status einer Kassieranlage 14 angezeigt wird, ebenfalls auch Sonderfunktionen, die die Benennung einer Kassieranlage 14 als Hauptkasse (hier Kasse 4) ermöglichen.

Die Symbole für die einzelnen Kassieranlagen 14 sind einzelne Taster bzw. Touchscreenfelder 26a, 26b, 26c, 26d, 26e, 26f, 26g, 26h, 26i, 26k, auch Touchscreenfeld "Kasse" 26a, 26b, 26c, 26d, 26e, 26f, 26g, 26h, 26i, 26k.

Auf den Touchscreenfeldern "Kasse" 26a, 26b, 26c, 26d, 26e, 26f, 26g, 26h, 26i, 26k ist auch die Nummer der Kasse jeweils eingeblendet. Jeder vorhandenen Kasse n ist ein Touchscreenfeld "Kasse" zugeordnet.

Das Touchscreenfeld "Kasse" 26a in Fig. 3 kann beispielsweise grün eingefärbt sein, um einen geöffneten Status der entsprechend zugeordneten Kassieranlage 14 (Kasse 1) anzuzeigen.

Das Touchscreenfelder "Kasse" 26b und 26c in Fig. 3 können beispielsweise rot eingefärbt sein, um einen geschlossenen Status der entsprechend zugeordneten Kassieranlagen 14 (Kasse 2 und Kasse 3) anzuzeigen.

Das Touchscreenfeld "Kasse" 26d in Fig. 3 kann beispielsweise grün eingefärbt sein, um einen geöffneten Status der entsprechend zugeordneten Kassieranlage 14 (Kasse 4) anzuzeigen. Durch die Markierung der Kassennummer mit zwei Sternen, d.h. z.B. "*4*", wird angezeigt, dass die "Kasse 4" als Hauptkasse geöffnet ist.

Eine derartige Hauptkasse wird z.B. niemals geschlossen und hat stets geöffneten Status (immer grüne Statusanzeige). Der Grund ist, dass hierdurch die Kunden auch bei nicht besetzter Kasse bzw. Hauptkasse wissen, dass diese Kasse benutzt werden kann.

Die Felder 28a, 28b und 28c betreffen generelle Statusanzeigen.

So betrifft Feld 28a die sogenannte "Ruf Marktleitung" Funktion.

Feld 28b weist ein Ankersymbol auf und Feld 28c eine Pausesymbol.

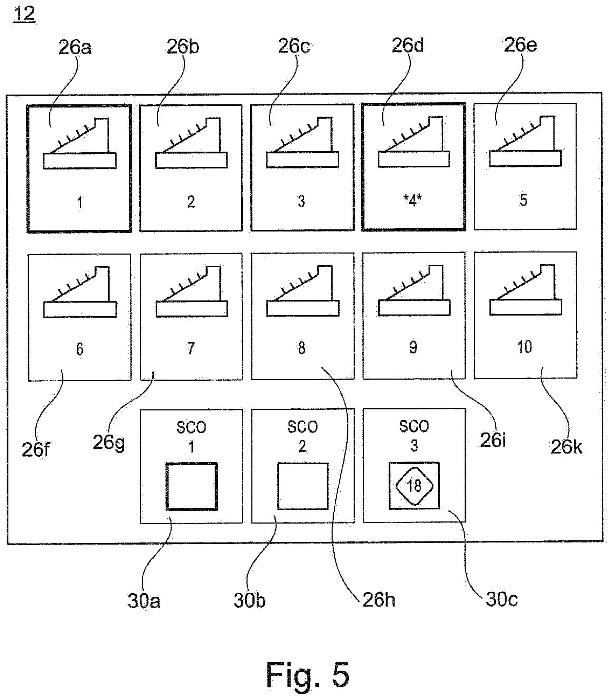

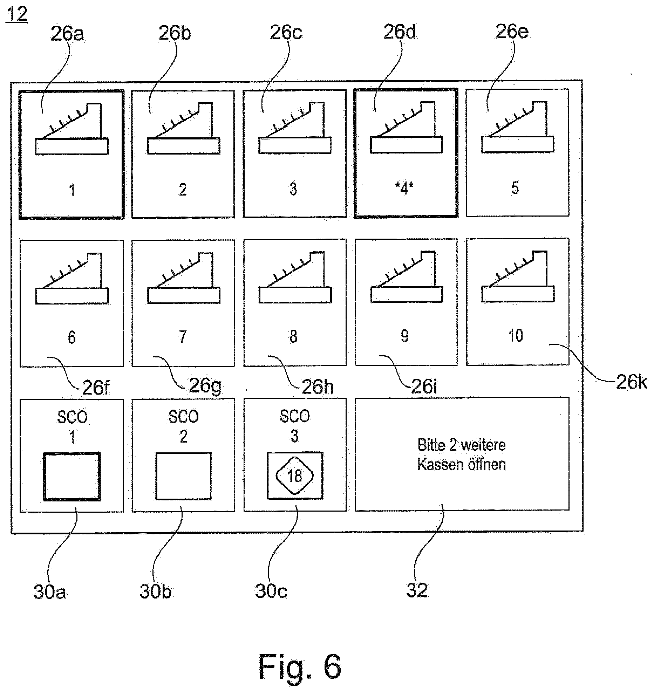

In Figur 5 und Figur 6 sind weitere Anzeigemodi der Kassieranlagenmanagementeinheit 12 auf dem Touchscreen gezeigt.

Neben den bereits vorstehend beschriebenen Touchscreenfeldern "Kasse" 26a-k sind Touchscreenfelder "SCO" 30a, 30b und 30c zur Kontrolle der Self-Checkout-Zone SCO 1 mit Touchscreenfeld "SCO 1" 30a, der Self-Checkout-Zone SCO 2 mit Touchscreenfeld "SCO 2" 30b und Self-Checkout-Zone SCO 3 mit Touchscreenfeld "SCO 3" 30c eingeblendet. Diese Funktion und Anzeige ist optional.

In Fig. 6 ist auch ein Nachrichtenfeld 32 ersichtlich.

Die Funktion des Kassieranlagensystems 10 lässt sich beispielsweise wie folgt beschreiben:
Über den Touchscreen der Kassieranlagenmanagementeinheit 12 und die Touchscreenfelder "Kasse" 26a-k kann der Status der Kassieranlagen 14 geändert werden.

Durch das Drücken eines Touchscreenfelder "Kasse" 26a-k wird die entsprechende Kassieranlage 14 in ihrem Status geändert.

Die Einfärbung in grün und rot des jeweiligen Touchscreenfeldes "Kasse" 26a-k entspricht der entsprechenden Einfärbung der entsprechenden illuminierten Statusanzeige 16b.

Soll eine Kassieranlage 14 (hier Kasse 1) von geschlossen auf geöffnet gesetzt werden, wird das zunächst rot eingefärbte Touchscreenfeld "Kasse" 26a gedrückt.

Dadurch wird die Statusänderung eingeleitet und das Touchscreenfeld "Kasse" 26a beginnt ebenso wie die Statusanzeige 16b grün zu blinken. Über die Sprachansage 16a wird akustisch mitgeteilt, dass Kasse 1 geöffnet wird.

Sobald die Kasse geöffnet ist, wird die Statusanzeige 16b grün illuminiert und das zugeordnete Touchscreenfeld "Kasse" 26a ebenfalls.

Um die Kasse 1 von geöffnet auf geschlossen zu setzen, wird das nun grün eingefärbte Touchscreenfeld "Kasse" 26a gedrückt.

Dadurch wird die Statusänderung eingeleitet und das Touchscreenfeld "Kasse" 26a beginnt ebenso wie die Statusanzeige 16b rot zu blinken. Über die Sprachansage 16a wird akustisch mitgeteilt, dass Kasse 1 geschlossen wird.

Dieser Vorgang kann entsprechend auch über die Touchoberfläche 18 direkt in der Kassieranlage 14 eingeleitet werden, jedoch nur für die jeweilige Kassieranlage, also hier nur für Kasse 1.

Die Statusänderung bei den übrigen Kassieranlagen 14 und den entsprechenden Touchscreenfeldern "Kasse" 26b-k erfolgt entsprechend.

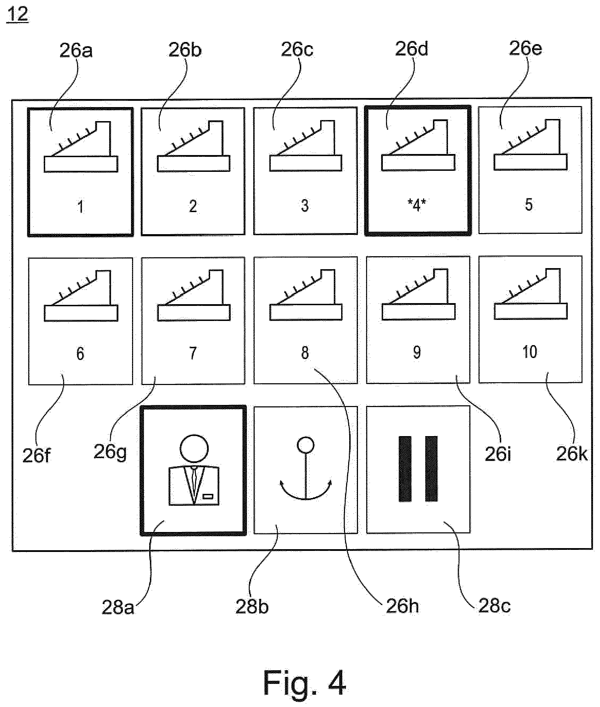

Mittels des Tasters 20 kann der Ruf Marktleitung ausgelöst werden. Dies wird dann, wie in Fig. 4 gezeigt, durch eine farbliche Änderung, z.B. blau, des Touchscreenfeldern "Kasse" 26d für Kasse 4 und des Feldes 28a angezeigt.

Wie weiter in Fig. 5 gezeigt, ist es auch möglich, über den Touchscreen 24 sog. Self-Checkout-Zonen, hier als Touchscreenfeld "SCO 1" 30a, Touchscreenfeld "SCO 2" 30b und Touchscreenfeld "SCO 3" 30c dargestellt, zu kontrollieren.

Die Self-Checkout-Zonen 1 und 2, dargestellt durch die Touchscreenfelder "SCO 1" 30a und "SCO 2" 30b erfordern keine Alterskontrolle, wohingegen die Self-Checkout-Zone 3 eine Alterskontrolle erfordert. Dies ist im entsprechenden Touchscreenfeld "SCO 3" 30c auch eingeblendet. Auch hier wird durch eine helle Einfärbung signalisiert, dass die entsprechend zugeordnete Kasse nicht geöffnet ist. Demgegenüber zeigt eine dunkle Einfärbung eine geöffnete Kasse, hier Touchscreenfeld "SCO 1" 30a (z.B. grün = geöffnet) und Touchscreenfeld "SCO 2" 30b (z.B. rot = geschlossen).

Wie weiter in Fig. 6 gezeigt, kann im Touchscreen 24 auch noch weiter eingeblendet werden, dass zusätzliche Kassen geöffnet werden. Hierzu kann beispielsweise je nach Bedarf bzw. bedarfsabhängig ein Nachrichtenfeld 32 eingeblendet werden, dass die entsprechende Mitteilung an den Kassieranlagenmanager übermittelt.

Grundsätzlich ist auch denkbar, dass dem Kassieranlagensystem 10 weitere Funktionen zugeordnet werden, wie beispielsweise Kameras oder stereoskopische Deckensensoren, so dass eine Warteschlangenlänge und auch die Wartezeiten vor den einzelnen Kassieranlagen 14 erkannt werden können. Insbesondere kann denkbar sein, dass das System automatisch erkennt, wie viele Personen sich in welchem definierten Kassenbereich befinden, wie viele Personen sich in der Warteschlange befinden und wie lange sich diese Personen schon in der Warteschlange befinden. Darüber hinaus kann analysiert werden, wie viele Personen in welcher Richtung den Kassenbereich durchquert haben.

Grundsätzlich denkbar ist, dass als Software und Kommunikationsverwaltung eine webbrowserbasierte Kontrollsoftware im Kassieranlagensystem 10 verwendet wird. Die Kassieranlagenmanagementeinheit 12 dient somit als virtuelles Bedienpult, das ein Touchbedienpult und -bedienfeld ausbildet. Grundsätzlich wird es darüber auch möglich, einen Fernzugriff zu ermöglichen. Mehrere Einzelhandelsgebäude können somit auch zusammengefasst werden und nochmals zentral überwacht und ausgewertet werden. Eine Fernbedienung und Fernsteuerung, aber auch eine Fernwartung wird dadurch möglich.

Die Kassieranlagenmanagementeinheit 12 weist als Kontrollsoftware eine webbrowsergestützte Kontrollsoftware auf.

Ein Fernzugriff über Internet, LAN, WLAN wird somit einfach möglich.

Auf Audiofiles für die akustische Ausgabe mittels der Sprachansage 16a kann beispielsweise durch die Kontrollsoftware auf einen entsprechenden zentralen Server zugegriffen werden oder einen sonstigen geeigneten Speicherort. Neue Sprachfiles können einfach ausgespielt werden, z.B. per SD-Karte oder per Download als Sprachfiles von einem Webserver oder aus einer Cloud.

### Bezugszeichen

- 10: Kassieranlagensystem
- 12: Kassieranlagenmanagementeinheit
- 14: Kassieranlage
- 16: optische und akustische Ausgabevorrichtung
- 16a: akustische Ausgabevorrichtung
- 16b: Statusanzeige
- 18: Touchoberfläche
- 20: manueller Taster
- 22: Netzwerkverbindung
- 24: Touchscreen
- 26a: Touchscreenfeld "Kasse"
- 26b: Touchscreenfeld "Kasse"
- 26c: Touchscreenfeld "Kasse"
- 26d: Touchscreenfeld "Kasse"
- 26e: Touchscreenfeld "Kasse"
- 26f: Touchscreenfeld "Kasse"
- 26g: Touchscreenfeld "Kasse"
- 26h: Touchscreenfeld "Kasse"
- 26i: Touchscreenfeld "Kasse"
- 26k: Touchscreenfeld "Kasse"
- 28a: Feld
- 28b: Feld
- 28c: Feld
- 30a: Touchscreenfeld "SCO 1"
- 30b: Touchscreenfeld "SCO 2"
- 30c: Touchscreenfeld "SCO 3"
- 32: Nachrichtenfeld

## Patentansprüche

1. Kassieranlagensystem (10) umfassend wenigstens eine Kassieranlagenmanagementeinheit (12) und wenigstens eine oder mehrere Kassieranlage(n) (14), wobei die Kassieranlage (14) wenigstens eine variierbare optische und/oder akustische Ausgabevorrichtung (16) aufweist, mittels derer Informationen zum Status und/oder zukünftigen Status der Kassieranlage (14) optisch und/oder akustisch ausgebbar sind, wobei die Kassieranlagenmanagementeinheit (12) und die Kassieranlage (14) über eine Netzwerkverbindung (22) miteinander in Kommunikationsverbindung stehen und über die Kassieranlagenmanagementeinheit (12) die Ausgabevorrichtung (16) der Kassieranlage (14) ansteuerbar ist.

2. Kassieranlagensystem (10) nach Anspruch 1, **dadurch gekennzeichnet, dass** wenigstens zwei oder mehrere Kassieranlagen (14) vorgesehen sind.

3. Kassieranlagensystem (10) nach Anspruch 1 oder Anspruch 2, **dadurch gekennzeichnet, dass** die Netzwerkverbindung (22) eine LAN-Verbindung ist, insbesondere eine LAN-Verbindung nach dem CAT5-Standard oder höher.

4. Kassieranlagensystem (10) nach einem der vorhergehenden Ansprüche, **dadurch gekennzeichnet, dass** die Kassieranlagenmanagementeinheit (12) eine Statusanzeige (16b) aufweist, mittels derer der Status der Kassieranlage (14) anzeigbar ist.

5. Kassieranlagensystem (10) nach einem der vorhergehenden Ansprüche, **dadurch gekennzeichnet, dass** die Kassieranlagenmanagementeinheit (12) eine Eingabevorrichtung aufweist, mittels derer der Status der Kassieranlage (14) veränderbar ist.

6. Kassieranlagensystem (10) nach einem der Ansprüche 4 und 5, **dadurch gekennzeichnet, dass** die Anzeige- und die Eingabevorrichtung kombiniert zu einer kombinierten Eingabe- und Anzeigevorrichtung zusammengefasst sind, wobei Anzeige- und Eingabevorrichtung insbesondere als Touchscreen (24) ausgeführt sind.

7. Kassieranlagensystem (10) nach einem der vorhergehenden Ansprüche, **dadurch gekennzeichnet, dass** das Kassieranlagensystem (10) wenigstens eine Self-Checkout-Zone aufweist, wobei die Self-Checkout-Zone kontrollierbar ist über die Kassieranlagenmanagementeinheit (12).

8. Kassieranlagensystem (10) nach einem der vorhergehenden Ansprüche, **dadurch gekennzeichnet, dass** die Kassieranlagenmanagementeinheit (12) als Kontrollsoftware eine webbrowsergestützte Kontrollsoftware aufweist.
